# EUROPÄISCHE PATENTANMELDUNG

(11) **EP 1 705 620 A1**
(43) Veröffentlichungstag der Anmeldung: **27.09.2006**
(21) Anmeldenummer: 05006464.1
(22) Anmeldetag: 24.03.2005
(51) Int. Cl.: G08C 17/00, H04L 7/04

(54) **Verfahren zur Synchronisation von Netzknoten und zugehöriges Netzwerk**

(71) Anmelder: ista Shared Services GmbH, 45131 Essen (DE)
(72) Erfinder: Bley, Bert, Dipl.-Ing., 45131 Essen (DE); Gronauer, Manfred, Dipl.-Phys., 45289 Essen (DE); Mügge, Günter, Dr.-Ing., 49159 Münster (DE)
(74) Vertreter: COHAUSZ DAWIDOWICZ HANNIG & SOZIEN

(57) **Zusammenfassung**

Die Erfindung betrifft ein Verfahren zur Synchronisation von mindestens zwei miteinander in Verbindung tretenden Netzknoten (A, B) eines zur drahtlosen Übertragung von Daten ausgelegten Netzwerks, insbesondere zur drahtlosen Übertragung und Verarbeitung von Verbrauchsmessdaten ausgelegten Sensometzwerks, zur Synchronisation der Netzknoten, um eine Kommunikationsverbindung zwischen diesen einzuleiten, in zeitlichen Abständen (T₁) von einem ersten Netzwerkknoten (A) ein auf einen Zeitraum (T_{SP}) begrenztes Synchronisationstelegrammpaket mit einer Vielzahl von Synchronisationstelegrammen gesendet wird, und mindestens ein zweiter Netzknoten (B) in zeitlichen Abständen (Tₐ) ein zeitlich begrenztes Empfangsfenster öffnet, innerhalb dessen ein Synchronisationstelegramm empfangbar ist. Die Erfindung betrifft weiterhin ein Netzwerk, insbesondere ein Sensornetzwerk zur drahtlosen Übertragung von Daten insbesondere Verbrauchsmessdaten mit mindestens zwei miteinander in Verbindung tretbaren Netzknoten (A, B), die jeweils zumindest eine Sendeeinheit und eine Empfangseinheit, eine Sensoreinheit, Mittel zur zeitlichen Steuerung ihres Sende- und Empfangsbetriebes und eine Stromversorgung aufweisen, wobei die Sendeeinheit mindestens eines ersten Netzknotens (A) in zeitlichen Abständen (T₁) zumindest ein Synchronisationstelegrammpaket sendet und die Empfangseinheit mindestens eines zweiten Netzknotens (B) in zeitlichen Abständen (T₂) ein zeitlich begrenztes Empfangsfenster öffnet, innerhalb dessen ein Synchronisationstelegramm des Synchronisationstelegrammpakets empfangbar ist, wobei nach erfolgreichem Empfang eine Kommunikation stattfinden kann.

## Beschreibung

Die Erfindung betrifft ein Verfahren zur Synchronisation von mindestens zwei miteinander in Verbindung tretenden Netzknoten eines zur drahtlosen Übertragung von Daten ausgelegten Netzwerks, insbesondere eines zur drahtlosen Übertragung und Verarbeitung von Verbrauchsmessdaten ausgelegten Sensornetzwerks.

Darüber hinaus betrifft die Erfindung ein zugehöriges Netzwerk, insbesondere ein Sensornetzwerk zur drahtlosen Übertragung von Daten insbesondere Verbrauchsmessdaten mit mindestens zwei miteinander in Verbindung tretbaren Netzknoten, die jeweils zumindest eine Sendeeinheit und eine Empfangseinheit, eine Sensoreinheit, Mittel zur zeitlichen Steuerung ihres Sende- und Empfangsbetriebes und eine Stromversorgung aufweisen, wobei die Sendeeinheit mindestens eines ersten Netzknotens (A) in zeitlichen Abständen (T_{S}) zumindest ein Synchronisationstelegramm sendet und die Empfangseinheit mindestens eines zweiten Netzknotens (B) in zeitlichen Abständen (T₂) ein zeitlich begrenztes Empfangsfenster öffnet, innerhalb dessen das zumindest eine Synchronisationstelegramm empfangbar ist, wobei nach erfolgreichem Empfang eine Kommunikation stattfinden kann.

Für eine drahtlose Übertragung von Verbrauchsmessdaten verschiedener Verbrauchsmessgeräte oder Verbrauchszähler wie beispielsweise Wärmezähler, elektronischen Heizkostenverteilern, Gas-, Wasser- oder Stromzählern, wie sie in Wohnungen und/ oder Wohnhäusern eingesetzt werden, stellen funkbasierte Sensornetzwerke mit zunehmender Attraktivität ein ideales Übertragungssystem zur Datenerfassung dar.

Es bietet sich hier die Möglichkeit, Verbrauchsdaten durch eine Funkablesung der Verbrauchszähler für eine verbrauchsabhängige Abrechnung auch ohne Betreten der Örtlichkeiten, in denen der bzw. die Verbrauchsmesszähler montiert sind, durch eine Ablese-Person zu erfassen. Drahtlose Sensornetzwerke (Wireless-Sensor-Networks, WSN) weisen im Allgemeinen mehrere Netzknoten auf, die miteinander in Verbindung treten können. Die Netzknoten umfassen in der Regel eine Sende- und Empfangseinheit, eine Sensoreinheit mit einem Sensor als Messaufnehmer und eine Stromversorgung. Darüber hinaus können die Netzknoten eines Netzwerks bzw. die Sensorknoten eines Sensornetzwerks auch Auswerteinrichtungen sowie Aktoren, Steuer- und/ oder Regeleinrichtungen aufweisen.

Sensornetzwerke sind skalierbar und bieten ein hohes Maß an Zuverlässigkeit, Ausfallsicherheit und bei geringem internen Energieverbrauch eine hohe Lebensdauer der Netzwerkkomponenten. Insbesondere in Bezug auf die Lebenserwartung der Netzwerkkomponenten stellt die innerhalb des Netzwerks zur Verfügung stehende Energie einen limitierenden Faktor dar, so dass neben Strom sparenden Bauelementen und energieoptimierten Algorithmen auch Mittel zur Steuerung und Begrenzung des Sende- und Empfangsbetriebs der einzelnen Netzknoten eingesetzt werden.

Zur Reduktion des Energieverbrauchs ist bekannt, die Sendeeinheit eines zur Sendung von Daten und/ oder Steuerbefehlen ausgebildeten Netzknotens in zeitlichen Abständen, beispielsweise mehrmals täglich zu aktivieren, womit ein Sendefenster geöffnet wird, in dem die Übertragung von Daten und/ oder Steuerbefehlen erfolgen kann. Eine Übertragung erfolgt meist unidirektional und damit unsynchronisiert, so dass Netzknoten entweder als Sender oder als Empfänger fungieren, wodurch der Energiebedarf eines Netzknotens aufgrund seiner begrenzten Funktionalität erheblich eingeschränkt wird. Die Funkempfänger innerhalb eines Sensornetzwerks sind überwiegend als stationäre Datensammelstellen ausgebildet, die ununterbrochen auf Empfangsbereitschaft geschaltet sind. Der Fachmann bezeichnet einen derartigen Zustand einer Empfangsstation als "idle listening".

Bei einer batteriebetriebenen Datensammelstation ist ein "idle listening" jedoch aufgrund des unnötig hohen Energieverbrauchs nicht zu vertreten. Es ist deshalb bekannt auch einen Empfänger für bestimmte Zeitintervalle zu aktivieren, was jedoch erfordert, dass sowohl Sender als auch Empfänger jeweils einen eigenen Zeitgeber zur Erzeugung einer eigenen Zeitbasis aufweisen, auf deren Grundlage eine Synchronisation zwischen Sender und Empfänger möglich ist.

Hierbei ist es notwendig, dass zumindest einer der beiden in Verbindung tretenden Netzknoten, d.h. Sender oder Empfänger, darüber Kenntnis besitzt, in welchen Zeitintervallen und/ oder zu welchen Zeitpunkten eine Übertragung des jeweils anderen Netzknotens erfolgt. Ist beispielsweise dem Empfänger bekannt, zu welchen Zeitpunkten die Sendeeinheit eines Netzknotens sendet, so kann der Empfänger auf der Grundlage seiner Zeitbasis gezielt zu diesen Zeitpunkten auf Empfang gehen.

Es hat sich hierbei als problematisch herausgestellt, dass die Zeitbasis der jeweiligen Netzknoten z.B. aufgrund der Realisierung der Zeitgeber mit Schwingquarzen eine erhebliche Temperaturabhängigkeit aufweisen. Im Folgenden wird unter einem Zeitgeber die interne Uhr eines Netzknotens verstanden. So kann es beispielsweise sein, dass bei einer erhöhten Umgebungstemperatur eines Netzwerkknotens A, beispielsweise eines Senders, seine Zeitbasis gegenüber derjenigen eines Netzwerkknotens B, beispielsweise eines Empfängers, in einer Umgebung mit einer deutlich niedrigeren Umgebungstemperatur erheblich vorläuft.

Als Folge dieser zeitlichen Diskrepanz in den Zeitbasen der beiden Netzknoten A, B kann es dazu kommen, dass das Sendefenster des Netzknotens A mit dem Empfangsfenster des Netzknotens B weder vollständig zur Deckung kommt noch sich teilweise mit dem Empfangsfenster überlappt. Im Folgenden wird unter diesem Sachverhalt eine Misslage des Empfangsfensters bzw. eine Misslage des Sendefensters verstanden. In diesem Fall besteht die Gefahr, dass keine Daten und/ oder Steuerbefehle empfangen werden, und dass in diesem Fall auch keine Synchronisation zwischen Sender und Empfänger erfolgen kann.

Zur Behebung dieser Problematik wird in der deutschen Offenlegungsschrift DE 199 05 316 A1 vorgeschlagen, zur sicheren Vermeidung eines Synchronisationsverlustes einen Empfänger eines Datenübertragungssystems mit einer Zeitsteuereinrichtung zur Abschätzung des Zeitpunktes der jeweils erwarteten nächsten Datensendung auszustatten. Die Zeitsteuereinrichtung aktiviert die Empfangseinheit des Empfängers unmittelbar vor dem Auftreten einer Sendung von Datenpaketen.

Für den Fall, dass die Sendung des Datenpakets aufgrund auseinander laufender Zeitbasen von Sender und Empfänger nicht genau zu dem von der Zeitsteuereinrichtung abgeschätzten Zeitpunkt stattfindet, wird eine Korrektur der Lage des Empfangsfensters, in der DE 199 05 316 A1 als Toleranzintervall bezeichnet, durchgeführt. Diese Korrektur erfolgt dadurch, dass der Zeitabstand von der letzten Datensendung des Senders zur erwarteten nächsten Datensendung mit einem Korrekturfaktor multipliziert wir, der sich aus dem Verhältnis des tatsächlichen Zeitabstandes zu dem Sollwert-Zeitabstand vom vorletzten zum letzten Datenempfang ermittelt.

In der DE 199 05 316 A1 wird davon ausgegangen, dass zwischen der Sendung zweier Datenpakete durch einen Sender stets ein definierter Soll-Zeitabstand vorliegt. Weicht nun der Ist-Zeitabstand vom Soll-Zeitabstand ab, so wird durch die Zeitsteuereinrichtung das Empfangsfenster des Empfängers für die nächste Datensendung früher oder später, entsprechend des Korrekturfaktors als Quotient des Ist-Zeitabstandes zum Soll-Zeitabstand vom vorletzten zum letzten Datenempfang, geöffnet.

Vorraussetzung ist bei dieser Empfangsfensterkorrektur, dass innerhalb des Empfangsfensters des Empfängers tatsächlich ein Datenpaket bzw. Synchronisationstelegramm eines Senders empfangen wird. Bei völliger Misslage des Empfangsfensters, d.h. im Falle eines nicht innerhalb der zeitlichen Grenzen des Empfangsfensters liegenden Synchronisationstelegramms, wird vom Empfänger folglich kein Empfang erkannt, so dass auch keine Synchronisation zwischen Sender und Empfänger stattfinden kann. Aufgrund dieses gravierenden Nachteils ist es beispielsweise nicht möglich, ein Netzwerk insbesondere ein Sensornetzwerk aufzubauen, neue Knoten in ein bestehendes Netzwerk einzugliedern oder verlorengegangene Netzknoten eines Netzwerks in dieses zu Reintegrieren, da in diesen Fällen Sender und Empfänger noch keine Kenntnis von einander besitzen und eine Misslage des Empfangsfensters eines Empfängers gegenüber des Sendefensters eines Senders vorliegt.

Der Erfindung liegt die Aufgabe zugrunde, ein Verfahren zur Synchronisation von mindestens zwei miteinander in Verbindung tretenden Netzknoten eines zur drahtlosen Übertragung von Daten ausgelegten Netzwerks bereitzustellen, bei dem beim Inverbindungtreten zweier Netzknoten ein minimaler Strombedarf erforderlich ist, so dass für einen Netzknoten bei adäquat kleiner Batterie eine hohe Lebensdauer von mehreren Jahren erreichbar ist.

Der Erfindung liegt ferner die Aufgabe zugrunde, ein Netzwerk insbesondere ein Sensornetzwerk zur drahtlosen Übertragung von Daten insbesondere Verbrauchsmessdaten mit mindestens zwei miteinander in Verbindung tretbaren Netzknoten bereitzustellen, bei dem sich ein sendender Netzknoten an dem für die Synchronisation erforderlichen Energieverbrauch bei Misslage des Empfangsfenster eines empfangenden Netzknotens beteiligt, so dass das Empfangsfenster vom Empfänger nicht unbedingt vergrößert werden muss.

Diese Aufgabe wird durch ein Verfahren nach Anspruch 1 sowie durch ein Netzwerk mit den Merkmalen des Anspruchs 10 gelöst. Vorteilhafte Ausgestaltungen der Erfindung sind in den Unteransprüchen genannt.

Die Beteiligung eines sendenden Netzknotens an dem für die Synchronisation erforderlichen Energieverbrauch bei Misslage des Empfangsfenster eines empfangenden Netzknotens kann erfindungsgemäß dadurch erreicht werden, dass der sendende Netzknoten vermehrt Synchronisationstelegramme in Form von Impulsen aussendet, welche dem Empfänger gestatten, bei Empfang eines derartigen Synchronisationstelegramms sein Empfangsfenster zu justieren.
Hierzu wird ein Verfahren zur Synchronisation von mindestens zwei miteinander in Verbindung tretenden Netzknoten (A, B) eines zur drahtlosen Übertragung von Daten ausgelegten Netzwerks, insbesondere zur drahtlosen Übertragung und Verarbeitung von Verbrauchsmessdaten ausgelegten Sensornetzwerks, vorgeschlagen, bei dem zur Synchronisation der Netzknoten, um eine Kommunikationsverbindung zwischen diesen einzuleiten, in zeitlichen Abständen T₁ von einem ersten Netzwerkknoten A ein auf einen Zeitraum T_{SP} begrenztes Synchronisationstelegrammpaket mit einer Vielzahl beabstandeter Synchronisationstelegramme gesendet wird.

Ein Abgleich der Zeitbasen der Netzknoten A, B vor einer Kommunikation zwischen ihnen ist damit möglich, wobei der sendende Netzknoten A sich an dem für die Synchronisation erforderlichen Energieaufwand beteiligt, der zum Auffinden eines Synchronisationstelegramms durch den Empfänger benötigt wird. Vorteilhaft ist bei dem erfindungsgemäßen Verfahren, dass für die Synchronisation Netzknoten A selbst nur einen geringen Energiebeitrag leisten braucht.

Alternativ oder in Kombination mit der Aussendung von Synchronisationstelegrammpaketen kann zur Synchronisation auch das zeitlich begrenzte Empfangsfenster vergrößert werden. Dies hat den Vorteil, dass die Wahrscheinlichkeit, innerhalb des Empfangsfensters von Netzknoten B ein Synchronisationstelegramm zu empfangen, zusätzlich erhöht wird.

Darüber hinaus kann alternativ oder in Kombination mit der zeitlichen Justierung des Empfangsfensters des Empfängers nach erfolgreichem Empfang auch eine zeitliche Justierung des Synchronisationstelegrammpakets des sendenden Netzknotens A erfolgen. Dies erfordert eine Rückmeldung des Empfängers über den Erhalt bzw. Empfang eines Synchronisationstelegramms. Ferner ist zu beachten, dass das Synchronisationstelegramm eines Netzknotens A von mehreren Netzknoten B, C "gehört" werden kann, wobei diese Netzknoten den Sendezeitpunkt des Synchronisationstelegramms und / oder des Synchronisationstelegrammpakets von A kennen, so dass eine zeitliche Anpassung von Netzknoten A an Netzknoten B eine größere Zeitdiskrepanz zwischen Netzknoten A und Netzknoten B zur Folge hätte. Eine zeitliche Justierung des Synchronisationstelegrammpakets eines sendenden Sensorknotens A ist deshalb nur in geringem Umfang vorteilhaft.

Des Weiteren kann auch eine Aneinanderreihung von Synchronisationstelegrammpaket an Synchronisationstelegrammpaket durchgeführt werden, um die Trefferwahrscheinlichkeit zusätzlich zu erhöhen, jedoch ist für diesen Fall ein erhöhter Energieverbrauch des Senders vorhanden.

In einer weiteren alternativen Ausführungsvariante der erfindungsgemäßen Synchronisationstelegrammpakete kann bei ausreichender zeitlicher Breite der einzelnen Synchronisationstelegramme auch eine Aussendung von nur wenigen Synchronisationstelegrammen innerhalb eines Synchronisationstelegrammpakets erfolgen, wodurch der Energieverbrauch des sendenden Netzknotens nicht wesentlich geändert wird.

Für eine weitere Energiereduktion ist es von Vorteil, die Anzahl der Synchronisationstelegramme innerhalb eines Synchronisationstelegrammpakets variabel zu wählen. So kann beispielsweise die Anzahl der Synchronisationstelegramme innerhalb des Synchronisationstelegrammpakets in Abhängigkeit von der Umgebungstemperatur des zu synchronisierenden Netzknotens und/oder in Abhängigkeit von der Synchronizität zwischen sendendem Netzknoten A und empfangenden Netzknotens B und/ oder kalenderabhängig und/ oder verbrauchsabhängig angepasst werden. Unter Synchronizität wird die zeitliche Diskrepanz zwischen den Uhren zweier Netzknoten verstanden, wobei eine geringe zeitliche Diskrepanz eine hohe Synchronizität und eine hohe zeitliche Diskrepanz eine geringe Synchronizität bedeutet.

Beispielsweise genügt bei hoher Synchronizität zwischen den Uhren zweier Netzknoten A, B die Aussendung von wenigen Synchronisationstelegrammen innerhalb eines Pakets. Bei geringer Synchronizität dagegen können zur Erhöhung der Trefferwahrscheinlichkeit deutlich mehr Synchronisationstelegramme innerhalb eines Pakets ausgesendet werden, wobei die Dauer des zugehörigen Synchronisationstelegrammpakets verbreitert oder auch konstant gehalten werden kann. Für den zweiten Fall erfolgt z.B. eine Reduzierung des Abstands der einzelnen Synchronisationstelegramme innerhalb des Synchronisationstelegrammpakets zueinander und/oder eine Reduzierung der Breite eines einzelnen Synchronisationstelegramms.

Es ist weiterhin von Vorteil, dass mindestens ein zweiter Netzknoten B in zeitlichen Abständen T₂ ein zeitlich begrenztes Empfangsfenster öffnet, innerhalb dessen ein Synchronisationstelegramm empfangbar ist. Damit wird ein besonders energieeffizientes Inverbindungtreten zwischen den Netzknoten A, B ermöglicht. Alternativ kann Netzknoten B auch permanent auf Empfang geschaltet sein, jedoch weist dieser Zustand einen unnötig hohen Energieverbrauch auf.

Besonders vorteilhaft ist es, wenn die Aussendung eines Synchronisationstelegrammpakets nur im Falle eines nicht oder nicht vollständig innerhalb der zeitlichen Grenzen des Empfangsfensters liegenden und von dem Synchronisationstelegrammpaket unabhängigen Synchronisationstelegramms ST erfolgt, da in diesem Fall auf eine zeitliche Asynchronizität zwischen den Uhren der Netzknoten A, B geschlossen werden kann, aufgrund deren das Synchronisationstelegramm ST nicht empfangen wird, so dass eine Synchronisation zwischen ihnen nicht möglich ist.

Alternativ oder zusätzlich kann die Aussendung von Synchronisationstelegrammpaketen auch bei Aufbau eines Sensornetzwerks und/ oder bei Integration neuer Knoten in ein bestehendes Sensornetzwerk und/ oder bei Reintegration verlorengegangener Netzknoten in das Netzwerk erfolgen. Hierdurch kann eine schnelle und unkomplizierte Vernetzung der unvernetzten Sensorknoten realisiert werden. Insbesondere kann bei derartigen Anwendungsbeispielen ein automatisiertes Aussenden von Synchronisationstelegrammpaketen erfolgen, womit die Möglichkeit besteht, ein Netzwerk zu realisieren, dass sich selbst aufbaut und/ oder sich selbst repariert und/ oder neue Netzknoten von selbst eingliedert.

Alternativ oder zusätzlich kann die Aussendung eines Synchronisationstelegrammpaketes durch einen Netzknoten A immer dann erfolgen, wenn er von einem speziellen Netzknoten B oder von keinem anderen Netzknoten eine Antwort auf sein Synchronisationstelegramm ST erhält.

Es ist weiterhin von Vorteil, wenn zumindest den innerhalb des Zeitraums T_{SP} gesendeten Synchronisationstelegrammen eine Kennung zugewiesen wird, die die Position dieser Synchronisationstelegramme innerhalb des Synchronisationstelegrammpakets definiert. Beim Empfang eines Synchronisationstelegramms mit einer Kennung, kann ein Empfänger unmittelbar erkennen, ob die Lage seines Empfangsfensters optimal ist, oder nicht, bzw. ob seine Zeitbasis gegenüber derjenigen des sendenden Netzknotens unterschiedlich ist, so dass er selbstständig eine Anpassung der zeitlichen Lage seines Fenster vornehmen kann.

Alternativ kann auch allen Synchronisationstelegrammen eine Kennung zugewiesen werden, womit beispielsweise auch eine Identifikation eines Senders möglich ist.

Als Kennung der innerhalb des Zeitraums T_{SP} gesendeten Synchronisationstelegrammen, kann diesen vorzugsweise eine Nummer um ein Bezugssynchronisationstelegramm vergeben werden. Damit ist eine vorzugsweise elektronische Auswertung besonders schnell und einfach möglich. Vorteilhaft ist hierbei auch, dass der Empfänger an Hand der Kennung unmittelbar erkennen kann, ob sein Empfangsfenster hinsichtlich der Lage zu dem Bezugssynchronisationstelegramm zu früh oder zu spät angeordnet ist.

Weiterhin bietet sich an, vorzugsweise alle Synchronisationstelegramme innerhalb eines Synchronisationspakets identisch zu beabstanden. Damit wird sichergestellt, dass bei einer zeitlichen Breite des Empfangsfensters, die vorzugsweise etwas größer gewählt ist, als der Abstand zwischen zwei Synchronisationstelegrammen innerhalb des Synchronisationstelegrammpakets, ein Synchronisationstelegramm empfangen wird. Alternativ kann der Abstand zwischen zwei Synchronisationstelegrammen innerhalb eines Synchronisationstelegrammpakets auch nicht äquidistant sein, jedoch ist für diese Ausführungsform der Erfindung ein größeres Empfangsfenster des Empfängers vorauszusetzen.

Nach erfolgreichem Empfang eines Synchronisationstelegramms kann seine Kennung derart ausgewertet werden sowie eine zeitliche Anpassung insbesondere eine Verschiebung des Empfangsfensters derart vorgenommen werden, dass es beim nächst folgenden von dem Synchronisationstelegrammpaket unabhängigen Synchronisationstelegramm ST im Bereich um dieses Synchronisationstelegramm liegt oder beim nächst folgenden Synchronisationstelegrammpaket innerhalb der zeitlichen Grenzen dieses Synchronisationstelegrammpakets liegt. Damit wird eine Synchronisierung zwischen sendendem und empfangendem Netzknoten durchgeführt, ohne das eine Änderung der internen Uhr eines der beiden Netzknoten notwendig wird.

Alternativ oder zusätzlich kann auch eine Verbreiterung des Empfangsfensters nach Auswertung der Kennung erfolgen, jedoch ist die zeitliche Breite des Empfangsfensters durch die Batteriekapazität eines empfangenden Netzknotens begrenzt und erzeugt darüber hinaus keine Synchronisierung zwischen Sender und Empfänger innerhalb eines Netzwerks.

Vorteilhaft ist es ferner, dass das Aussenden eines Synchronisationstelegramms (ST) eines ersten Netzknotens (A) an alle anderen Knoten im Netzwerk erfolgt, jedoch das Öffnen des Empfangsfensters nur von mindestens einem zweiten Netzknoten (B) erfolgt, der innerhalb der gleichen Hierarchieebene wie der erste Netzknoten (A) oder in einer direkt benachbarten vorzugsweise darunter liegenden Hierarchieebene angeordnet ist. Damit wird die hierarchische Struktur innerhalb des Netzwerks beachtet, wodurch der Datenaustausch und die Verwaltung von Daten und Knoten innerhalb des Netzwerks einfach, übersichtlich und fehlerunanfällig ist. Insbesondere fördert dieses Merkmal die Skalierbarkeit eines Netzwerks, so dass die Eingliederung neuer Knoten leicht möglich wird.

Alternativ ist es auch möglich, dass jeder Netzknoten innerhalb des Netzwerks mit jedem anderen Netzknoten des Netzwerks in Verbindung treten kann, beispielsweise bei Inbetriebnahme eines Netzwerks, jedoch gestaltet sich die Kommunikation insbesondere die Bildung von Kommunikationspfaden in diesem Fall schwieriger.

Es ist vorteilhaft, wenn der zeitliche Abstand zwischen zwei Synchronisationstelegrammen innerhalb eines Synchronisationstelegrammpakets kleiner gewählt ist, als die zeitliche Breite des Empfangsfensters, so dass im Falle einer vollständigen Lage des Empfangsfensters innerhalb des Synchronisationstelegrammpakets zumindest ein Synchronisationstelegramm empfangbar ist. Damit wird der zur Synchronisation erforderliche Energieaufwand optimal zwischen einem als Sender fungierenden Netzknotens A und einem als Empfänger fungierenden Netzknotens B aufgeteilt.

Zur erfindungsgemäßen Anwendung des zugrunde liegenden Verfahrens innerhalb eines Netzwerks, wird ein Netzwerk vorgeschlagen, insbesondere ein Sensornetzwerk zur drahtlosen Übertragung von Daten insbesondere Verbrauchsmessdaten mit mindestens zwei miteinander in Verbindung tretbaren Netzknoten A, B, die jeweils zumindest eine Sendeeinheit und eine Empfangseinheit, eine Sensoreinheit, Mittel zur zeitlichen Steuerung ihres Sende- und Empfangsbetriebes und eine Stromversorgung aufweisen, wobei die Sendeeinheit mindestens eines ersten Netzknotens A in zeitlichen Abständen T₁ zumindest ein Synchronisationstelegrammpaket sendet und die Empfangseinheit mindestens eines zweiten Netzknotens B in zeitlichen Abständen T₂ ein zeitlich begrenztes Empfangsfenster öffnet, innerhalb dessen zumindest ein Synchronisationstelegramm des Synchronisationstelegrammpakets empfangbar ist, wobei nach erfolgreichem Empfang eine Kommunikation stattfinden kann, und wobei das Inverbindungtreten der beiden Netzknoten A, B nach dem Verfahren nach einem der Ansprüche 1 bis 9 erfolgt.

Besonders vorteilhaft ist es hierbei, wenn das zugrunde liegende Netzwerk ein hierarchisches Netzwerk ist, beispielsweise eine Baumstruktur aufweist und die Netzknoten innerhalb des Netzwerks bidirektional miteinander in Verbindung stehen. In diesem Fall ist der Datenaustausch und die Verwaltung von Daten und Knoten innerhalb des Netzwerks einfach, übersichtlich und fehlerunanfällig. Insbesondere fördert dieses Merkmal die Skalierbarkeit des Netzwerks, so dass die Eingliederung neuer Knoten leicht möglich wird.

Im Folgenden wird eine bevorzugte Ausführungsvariante des erfindungsgemäßen Verfahrens respektive eines Netzwerks beschrieben, in dem das Verfahren Anwendung finden kann. In einer besonders vorteilhaften Ausprägung der Erfindung ist das Netzwerk als ein Sensornetzwerk ausgebildet.

Bei Sensornetzwerken in denen die zu Verfügung stehenden Energiereserven der limitierende Faktor für die Datenübertragungsrate sind, stellt die Art und Weise, auf die zwei Netzknoten miteinander in Verbindung treten im Hinblick auf ein energieeffizientes Vorgehen eine besondere Herausforderung dar. Der Energieverbrauch innerhalb eines Sensornetzwerkes kann insbesondere dadurch reduziert werden, dass ein als Sender fungierender Netzknoten A und ein als Empfänger fungierender Netzknoten B ihr jeweiliges Sende- bzw. Empfangsfenster, die beide jeweils zeitlich begrenzt sind, in Zeitabständen öffnen. Im Folgenden wird unter einem Sensorknoten ein Netzknoten innerhalb eines Sensornetzwerks verstanden.

Damit zwei Sensorknoten innerhalb eines Sensornetzwerks miteinander insbesondere bidirektional in Verbindung treten können, weisen sie erfindungsgemäß zumindest eine Sendeeinheit und eine Empfangseinheit sowie Mittel zur zeitlichen Steuerung des Sende- und Empfangsbetriebs und eine Stromversorgung auf. Ferner weisen sie eine Sensoreinheit mit einem Sensorelement zur Messung physikalischer Größen wie beispielsweise Temperatur, Durchfluss und/ oder elektrische Leistung auf.

Zur zeitlichen Steuerung des Sende- und Empfangsbetriebes werden bevorzugt preiswerte miniaturisierte Zeitgeber verwendet, die mittels Schwingquarzen realisiert sind und daher eine erhebliche Temperaturabhängigkeit aufweisen. Insbesondere bei Sensorknoten A, die zur Heizkostenerfassung als Wärmezähler ausgebildet, vorzugsweise an Heizungskörpern und/oder ―leitungen montiert sind und in Zeitabständen ihre Messdaten an einen als Empfänger fungierenden Sensorknoten B senden, der von einer geringeren Umgebungstemperatur beaufschlagt wird, entstehen teilweise erhebliche mit wachsender Zeit zunehmende Zeitdiskrepanzen zwischen der Zeitbasis des Sensorknotens A und derjenigen des Sensorknotens B.

Diese Zeitdiskrepanzen können zu einer Misslage des Empfangsfensters des Sensorknotens B führen, so dass ein gesendetes Synchronisationssignal unter Umständen nicht mehr detektiert wird. Um einen sicheren Austausch von Daten und/ oder Steuerbefehlen zwischen zwei Sensorknoten zu gewährleisten, ist es daher notwendig eine Synchronisation zwischen diesen Knoten durchzuführen. Hierzu sendet ein Sensorknoten A zum Zeitpunkt t₁ zur Synchronisation und zur Einleitung eines Kommunikationsvorgangs ein kurzzeitiges Synchronisationssignal aus.

Synchronisationssignale werden häufig auch als Synchronisationstelegramme bezeichnet und weisen in der Regel keine Messdaten auf. Sie besitzen die Form und die zeitliche Dauer eines Impulses, häufig im Bereich von einer oder weniger Millisekunden bis zu wenigen hundert Millisekunden. Aus diesem Grund sind Synchronisationstelegramme dem Fachmann auch unter dem Begriff "Beacon" bekannt.

Andere Sensorknoten, beispielsweise ein Sensorknoten B, wachen zu diesem Zeitpunkt t₁ oder in einer Umgebung darum auf und es kann eine Synchronisation mit dem sendenden Sensorknoten sowie eine anschließende Kommunikation stattfinden. Durch den Synchronisationsvorgang unmittelbar vor einer stattfindenden Kommunikation zwischen zwei Sensorknoten, wird ein zuverlässiger Daten- und / oder Steuerbefehlaustausch bei sehr geringem Energieaufwand sichergestellt.

Mit dem erfindungsgemäßen Verfahren ist ferner ein zeiteffizienter und insbesondere ein energieeffizienter Aufbau eines Sensornetzwerks, in einfacher Weise eine Eingliederung neuer Knoten in ein bestehendes Sensornetzwerk und eine schnelle und aufwandsarme Reintegration verlorengegangener Knoten möglich.

Weitere Vorteile und Merkmale der Erfindung ergeben sich aus der nachfolgenden detaillierten Beschreibung und den in den Figuren 1 bis 5 dargestellten Ausführungsvarianten.

Es zeigen:
Figur 1: Prinzipskizze eines vereinfachten erfindungsgemäßen Netzwerks mit den Sensorknoten A, B, C und D
Figur 2a: Aktivitätsverlauf der Sensorknoten A, B, C und D für Synchronisation ohne Aussendung eines Synchronisationstelegrammpakets von A
Figur 2b: Aktivitätsverlauf der Sensorknoten A, B, C und D für Synchronisation mit Aussendung eines Synchronisationstelegrammpakets von A
Figur 3: Aktivitätsverlauf zweier Sensorknoten A, B, bei Misslage des Empfangsfensters von B
Figur 4: Veranschaulichung der erfindungsgemäßen Erweiterung des Synchronisationsintervalls auf ein virtuelles Fenster
Figur 5: Eine Ausführungsvariante für die Vergabe einer Kennung der einzelnen Synchronisationstelegramme
Figur 6: Beispiel für ein erfindungsgemäßes Netzwerk komplexerer Struktur

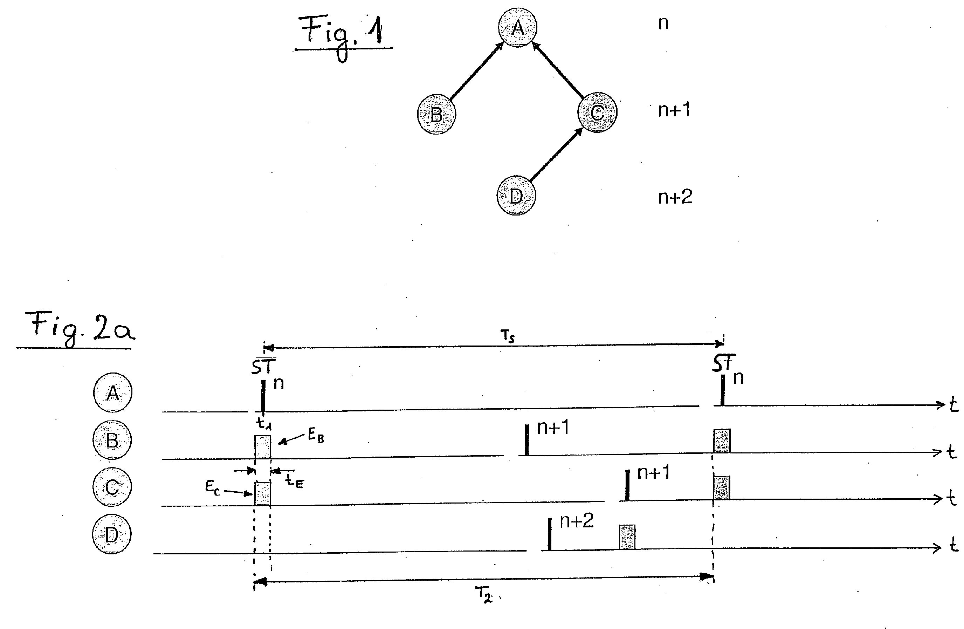

Figur 1 zeigt eine Netzwerkstruktur eines Netzwerks mit den Sensorknoten A, B, C, und D. Diese schematisierte Darstellung eines einfachen Netzwerks dient lediglich zur Veranschaulichung des erfindungsgemäßen Verfahrens. Die Anwendung des Verfahrens innerhalb eines Netzwerks und das zugehörige Netzwerk ist nicht auf die in Figur 1 dargestellte Anzahl und Anordnung der Knoten im Netz beschränkt.

In einer bevorzugten Ausführungsvariante ist das Netzwerk ein hierarchisch aufgebautes Netzwerk mit einer Baumstruktur. In Figur 1 ist ein sehr einfaches Netzwerk veranschaulicht, welches beispielhaft 3 Hierarchieebenen aufweist, deren Indizierung nach unten zunimmt. Sensorknoten A stellt die Wurzel des Baumes dar und wird auch als Basis bezeichnet. Die zugehörige Hierarchieebene besitzt den Index 0 und wird als Basisebene bezeichnet.

Die nächst niedrigere Hierarchieebene besitzt den Index 1 und wird in diesem Beispiel durch die Sensorknoten B und C gebildet. Hierarchieebene 2 wird hier nur von D gebildet. Zwischen den Sensorknoten sind gerichtete Kanten in Form von Pfeilen dargestellt, die angeben, von welchem Knoten zu welchem Knoten Messdaten gesendet werden.

Figur 2a veranschaulicht die Aktivitäten der Sensorknoten A, B, C und D beim ordnungsgemäßen Inverbindungtreten miteinander, d.h. bei nicht vorhandener Misslage eines Empfangsfensters, aufgetragen über der Zeit t. Zur Einleitung einer Kommunikation sendet Sensorknoten A ein Synchronisationstelegramm ST zum Zeitpunkt t₁ aus sowie in regelmäßigen Abständen T_{S}, beispielsweise alle 5 bis 10 Minuten, ein weiteres Synchronisationstelegramm. Bezogen auf dieses Beispiel weist das Synchronisationstelegramm ST in einer bevorzugten Ausführungsvariante eine zeitliche Breite von einigen Millisekunden, vorzugsweise 1 bis 2 Millisekunden auf.

Als Sensorknoten der direkt unter der Hierarchieebene von Sensorknoten A liegenden Hierarchieebene können B und C den Sendezeitpunkt des Synchronisationstelegramms ST kennen, werden durch ihre Zeitsteuereinrichtung aktiviert ("aufwachen") und gehen regelmäßig in Zeitabständen T₂ auf Empfang, so dass eine Synchronisation zum sendenden Sensorknoten sowie eine anschließende Kommunikation entstehen kann.

Figur 2a zeigt ferner, dass in einer vorteilhaften Ausführungsvariante der Erfindung alle Sensorknoten Synchronisationstelegramme aussenden, die jedoch nur von bestimmten Sensorknoten, die zu genau zu diesen Sendezeitpunkten aufwachen, empfangen werden können. In dem Ausführungsbeispiel eines Netzes gemäß Figur 1 sendet Sensorknoten A, auch Vater genannt, ein Synchronisationstelegramm und die Sensorknoten B und C, Kinder von A, hören zu. Darüber hinaus sendet Sensorknoten C ein Synchronisationstelegramm und D hört zu. Sensorknoten B und D senden zwar auch Synchronisationstelegramme jedoch besitzen sie in diesem Beispiel beide keine Kinder, so dass ihnen auch kein Sensorknoten zuhört.

Energetisch günstig ist es, die Synchronisationsintervalle T_{S} möglichst lang zu wählen. Die Tatsache, dass die Uhren der Sensorknoten auch kurzzeitig, z.B. durch kurzfristig erhöhtem Temperatureinfluss, nicht synchron laufen, ruft die Notwendigkeit hervor, dass der/ die Empfänger, in dem zugrunde liegenden Beispiel durch die Sensorknoten B und C gebildet, sein/ ihr Empfangsfenster E_{B}, Ec etwas vor dem erwarteten Empfangszeitpunkt öffnen muss/ müssen, um das Synchronisationstelegramm sicher zu empfangen.

Bei Vergrößerung des Synchronisationsintervalls T_{S} entstünde eine höhere Zeitdiskrepanz zwischen den Uhren der Sensorknoten A und B bzw. A und C, so dass die Empfangsfenster E_{B} und E_{C} als Konsequenz vergrößert werden müssten. Die zeitliche Länge t_{E} des Empfangsfensters ist jedoch insbesondere dadurch begrenzt, dass die Batterie eines Sensorknotens, beispielsweise eine Knopfzelle, kurzzeitig nur eine begrenzte Energiemenge zur Verfügung stellen kann und häufig kommt es dazu, dass die zeitliche Diskrepanz zwischen den Uhren zweier Sensorknoten größer als die maximal verfügbare Länge des Empfangsfensters ist. Synchronisiert werden kann nur innerhalb eines Empfangsfensters, da zur Synchronisation ein Synchronisationstelegramm empfangen werden muss. Eine Vergrößerung der Empfangsfenster E_{B}, bzw. E_{C} ist somit oftmals nicht möglich und im Hinblick auf ein energieeffizientes Inverbindungtreten nicht ratsam.

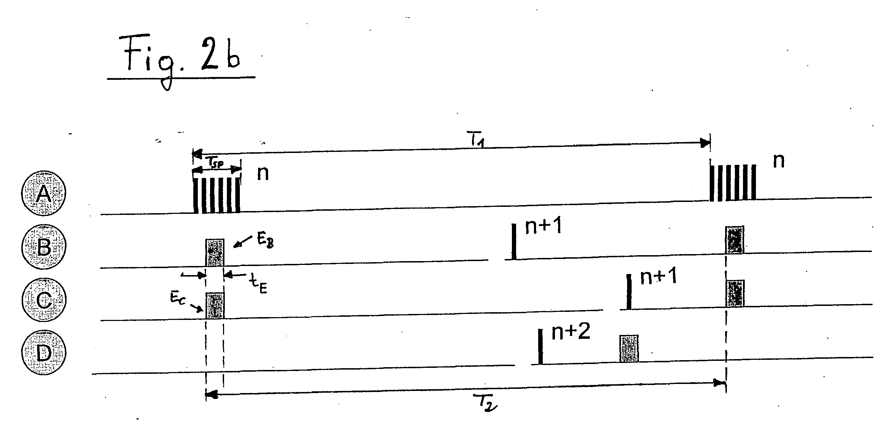

Zur Erhöhung des Zeitraums, innerhalb dessen synchronisiert werden kann, über die zeitlichen Grenzen des maximal möglichen Empfangsfensters hinaus, wird erfindungsgemäß vorgeschlagen, in zeitlichen Abständen T₁ von einem ersten Netzwerkknoten A ein auf einen Zeitraum T_{SP} begrenztes Synchronisationstelegrammpaket mit einer Vielzahl beabstandeter Synchronisationstelegramme auszusenden. Dies wird durch die Veranschaulichung des Aktivitätsablaufs beim Inverbindungtreten der Netzknoten A, B bzw. A, C zur Synchronisation nach erfindungsgemäßem Verfahren in Figur 2b dargestellt. Ein derartiger Aktivitätsverlauf wird im Folgenden als Normalfall verstanden. Derartige Synchronisationstelegrammpakete können mit der Bezeichnung "Beacon-Bursts" beschrieben werden.

Ein beispielsweise als Sender fungierender Sensorknoten A sendet somit nicht nur ein Synchronisationstelegramm, sondern mehrere kurz beabstandete Synchronisationstelegramme aus, wobei dieser zeitliche Abstand d vorzugsweise etwas unterhalb der maximal möglichen Länge des Empfangsfensters liegt. Damit wird sichergestellt, dass bei Öffnen eines Empfangsfensters (E_{B}, E_{C}) innerhalb des Zeitraums T_{SP} und bei gleichzeitig vollständigem Innenliegen des Empfangsfensters innerhalb des Zeitraum T_{SP} mindestens ein Synchronisationstelegramm empfangen werden und damit eine Synchronisation stattfinden kann.

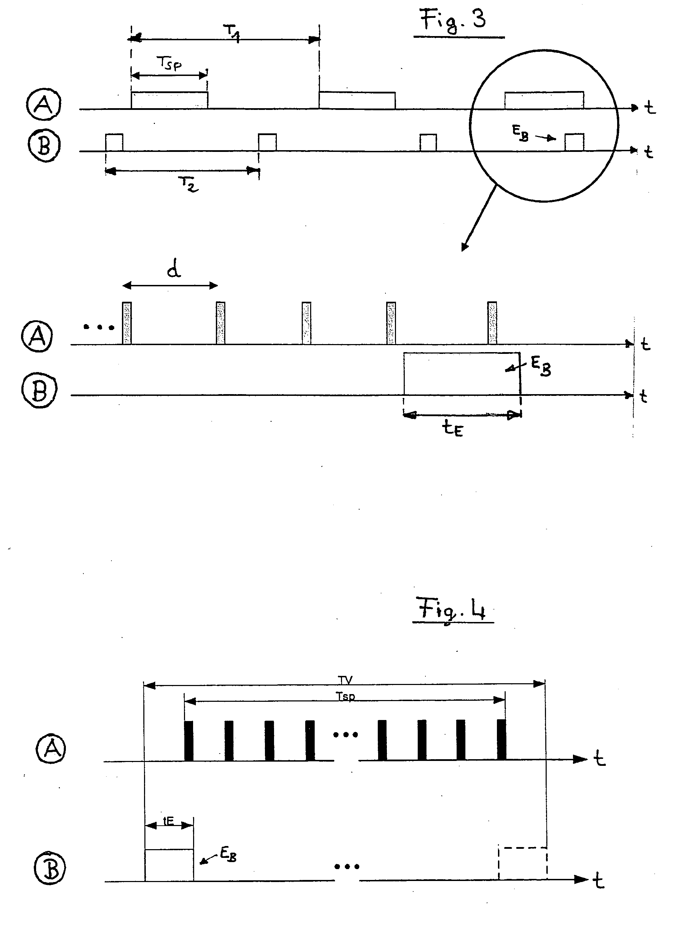

Figur 3 zeigt die Aktivität zweier Sensorknoten A, B gemäß des der Erfindung zugrunde liegenden Verfahrens für das Beispiel einer Inbetriebnahme eines Sensornetzes und/ oder einer Wiedereingliederung eines unvernetzten Sensorknotens B, wobei der erste Sensorknoten A als Sender eines Synchronisationstelegrammpakets dargestellt ist und der zweite Sensorknoten B einen Empfänger darstellt. Aufgrund einer Asynchronität zwischen den beiden Uhren der Sensorknoten, wobei in Figur 3 beispielhaft die Uhr von Sensorknoten B im Mittel schneller läuft als die Uhr von Sensorknoten A, und der dadurch entstehenden Misslage des Empfangsfensters gegenüber der von Sensorknoten A gesendeten Signale, muss das Sensornetz zunächst - oder im Falle einer Wiedereingliederung eines unvernetzten Sensorknotens B wieder- synchronisiert werden.

Da für den Normalbetrieb die Wahrscheinlichkeit, dass bei einer hohen zeitlichen Asynchronität der Uhren der beiden Sensorknoten A, B ein Empfänger innerhalb seines Empfangsfensters ein Synchronisationstelegramm empfängt, gering ist, muss diese Wahrscheinlichkeit für das Zustandekommen eines Inverbindungtretens und einer anschließenden Kommunikation erhöht werden. Bei bekannten Verfahren nach dem Stand der Technik schalten hierzu die Empfänger auf Dauerempfang, was jedoch sehr stromintensiv ist. Erfindungsgemäß sendet Sensorknoten A zur Erhöhung der Trefferwahrscheinlichkeit in zeitlichen Abständen T₁ Synchronisationstelegrammpakete aus, die auf den Zeitraum T_{SP} begrenzt sind.

Ein Synchronisationstelegrammpaket kann in diesem Fall viele Synchronisationstelegramme enthalten und maximal so lang sein, wie die momentan verfügbare Energie erlaubt. Die Aussendung derartig vieler Synchronisationstelegramme als Gruppe könnte als "Dauerfeuer" bezeichnet werden. Im Anschluss an das Synchronisationstelegramm kann eine Erholungsphase der Dauer T₁ - T_{SP} erfolgen, nach welcher das "Dauerfeuer" wieder aufgenommen werden kann.

Fällt ein Empfangsfenster zumindest teilweise in den Bereich eines Synchronisationstelegrammpakets, so dass von Sensorknoten B ein Synchronisationstelegramm empfangen werden kann, kann eine Synchronisation und eine anschließende Kommunikation erfolgen. Die Vergrößerung des Ausschnitts, in dem das Empfangsfenster E_{B} im Bereich des Synchronisationstelegrammpakets liegt, zeigt, dass ein Synchronisationstelegrammpaket eine Vielzahl zeitlich beabstandete Synchronisationstelegramme aufweist, von denen in Figur 3 nicht alle dargestellt sind. In einer besonders vorteilhaften Ausführungsform weisen die Synchronisationstelegramme zueinander alle einen identischen Abstand auf.

In einer alternativen Ausführungsvariante kann sich auch ein Synchronisationstelegramm unmittelbar an das vorherige Synchronisationstelegramm anschließen, so dass die Synchronisationstelegramme innerhalb des Synchronisationstelegrammpakets nicht beabstandet sind. Dies hat den Vorteil, dass auch im Falle eines sehr kleinen Empfangsfensters beispielsweise aufgrund einer geringen Batteriekapazität, dennoch eine hohe Wahrscheinlichkeit für den Empfang eines Synchronisationstelegramms vorliegt.

In einer möglichen Ausführungsvariante des erfindungsgemäßen Verfahrens insbesondere bei Inbetriebnahme eines Netzwerks und/ oder bei Selbstreparatur des Netzwerks kann die Dauer T_{SP} eines Synchronisationstelegrammpakets mit 10 bis 20 Synchronisationstelegrammen einige hundert Millisekunden betragen, z.B. 200 Millisekunden. Ferner kann das Intervall T₁ zwischen zwei aufeinander folgenden Synchronisationstelegrammpaketen einige tausend Millisekunden z.B. 2000 Millisekunden betragen.

Ein Synchronisationstelegramm innerhalb eines Synchronisationstelegrammpakets weist bei einer besonders vorteilhaften Ausführung des zugrunde liegenden Verfahrens eine zeitliche Breite von wenigen Millisekunden auf. Ein bevorzugter Abstand zwischen zwei aufeinander folgenden Synchronisationstelegramme innerhalb eines Synchronisationstelegrammpakets liegt etwa bei wenigen zehn Millisekunden für ein besonders energieeffizientes Verfahren vorzugsweise bei 15 Millisekunden, kann jedoch auch kleiner oder gleich null gewählt werden.

Figur 4 zeigt ein auf den Zeitraum T_{SP} begrenztes Synchronisationstelegrammpaket eines Sensorknotens A sowie ein gerade soweit in das Paket hineinragendes Empfangsfenster E_{B} eines Sensorknotens B, dass von Knoten B gerade das erste Synchronisationstelegramm des Pakets empfangen werden kann. Ferner ist mit gestrichelten Linien ein alternatives Empfangsfenster von B dargestellt, welches gerade soweit aus dem Paket herausragt, dass von Knoten B gerade das letzte Synchronisationstelegramm des Pakets empfangen werden kann.

Befindet sich das Empfangsfenster E_{B} vollständig innerhalb des Pakets, so kann zumindest ein Synchronisationstelegramm von Knoten B empfangen werden, da der zeitliche Abstand der einzelnen Synchronisationstelegramme zueinander innerhalb des Pakets vorzugsweise etwas kleiner gewählt ist, als die zeitliche Breite des Empfangsfensters E_{B}. Das bisher ausschließlich zur Synchronisation zur Verfügung gestandene Empfangsfenster E_{B} mit seiner zeitlichen Breite t_{E} wird damit derart vergrößert, dass ein virtuelles Empfangsfenster der zeitlichen Breite T_{V} entsteht, innerhalb dessen eine Synchronisation zwischen den Sensorknoten A und B stattfinden kann.

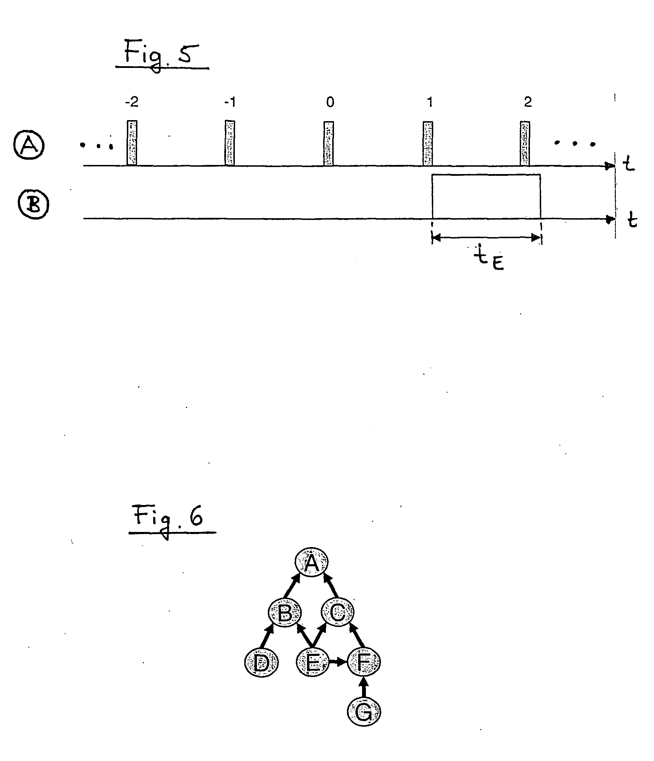

Figur 5 zeigt eine bevorzugte Ausführungsvariante des erfindungsgemäßen Verfahrens, bei dem den einzelnen Synchronisationstelegramme innerhalb eines Synchronisationstelegrammpakets eine Kennung zugewiesen wird. Diese Kennung kann mit dem Synchronisationstelegramm beispielsweise in einem Header übertragen werden, wobei ein Empfänger nach erfolgreichem Empfang eines der Telegramme des Pakets dazu eingerichtet ist, die Kennung auszuwerten und aufgrund dessen sein Empfangsfenster derart zeitlich anzupassen vorzugsweise zu verschieben, dass bei der Aussendung eines nächsten von einem Synchronisationstelegrammpaket unabhängigen Synchronisationstelegramms oder eines nächsten Synchronisationstelegrammpakets eines Sensorknotens A das Empfangsfenster des Sensorknotens B um das Synchronisationstelegramm herum oder zur Mitte dieses Synchronisationstelegrammpakets optimal platziert ist, insbesondere innerhalb der zeitlichen Grenzen des Synchronisationstelegrammpakets liegt, um den Empfang eines Synchronisationstelegramms sicherzustellen.

In einer besonders vorteilhaften Ausführungsform weist das Synchronisationstelegrammpaket eine ungerade Anzahl von Synchronisationstelegrammen auf, wobei ein Bezugssynchronisationstelegramm als Referenztelegramm gewählt wird, welches beispielsweise von dem zentralen Synchronisationstelegramm innerhalb des Synchronisationstelegrammpakets gebildet werden kann und diesem als Kennziffer vorzugsweise die Nummer 0 zugewiesen ist, wobei die Synchronisationstelegramme, die zeitlich früher als das Referenztelegramm gesendet werden, eine negative Kennziffer aufweisen und die Synchronisationstelegramme, die zeitlich später als das Referenztelegramm gesendet werden, eine positive Kennziffer aufweisen, so dass der Empfänger durch Auswertung des Vorzeichens der Kennung direkt und einfach Rückschlüsse auf seine Lage ziehen kann.

Weiterhin ist es von Vorteil, die Anzahl der Synchronisationstelegramme innerhalb eins Synchronisationstelegrammpakets variabel zu wählen. So genügt beispielsweise bei einer geringen zeitlichen Diskrepanz zwischen den Uhren zweier Sensorknoten A, B die Aussendung von wenigen Synchronisationstelegrammen. Bei höherer zeitlichen Diskrepanz dagegen werden zur Erhöhung der Trefferwahrscheinlichkeit deutlich mehr Synchronisationstelegramme ausgesendet, wobei die Dauer des zugehörigen Synchronisationstelegrammpakets und damit die Dauer des virtuellen Empfangsfensters verbreitert oder auch konstant gehalten werden kann. Für den zweiten Fall würde eine Reduzierung des Abstands der einzelnen Synchronisationstelegramme innerhalb des Synchronisationstelegrammpakets zueinander erfolgen.
Anhand der Auswertung der Kennung eines Synchronisationstelegramms kann der empfangende Sensorknoten B die zeitliche Lage seines Empfangsfensters innerhalb des Synchronisationstelegrammpakets ermitteln und somit auch die zeitliche Diskrepanz seiner Uhr gegenüber der Uhr des sendenden Sensorknotens A ermitteln. Innerhalb einer sich an die Synchronisation anschließenden Kommunikation zwischen Sensorknoten A und B kann die Information der zeitlichen Diskrepanz an Sensorknoten A übermittelt werden, der daraufhin eine Anpassung der Anzahl der Synchronisationstelegramme innerhalb des Synchronisationstelegrammpakets vornimmt, so dass eine zeitdiskrepanzabhängige Anpassung bzw. Steuerung der Anzahl der Synchronisationstelegramme innerhalb des Synchronisationstelegrammpakets möglich ist.

Da die Umgebungstemperatur eines Sensorknotens als primäre Einflussgröße für die Höhe seiner zeitlichen Diskrepanz (Asynchronität) gegenüber eines anderen Sensorknotens maßgebend ist, kann eine automatische Anpassung der Anzahl der Synchronisationstelegramme innerhalb eines Synchronisationstelegrammpakets anhand der Temperatur erfolgen. Insbesondere bei Sensorknoten, die als Wärmezähler an Heizkörpern befestigbar sind, treten bei Heizungsbetrieb gegenüber den Datensammelstellen, die vorzugsweise fernab eines Heizkörpers montiert sind, hohe zeitliche Diskrepanzen der Uhren untereinander auf.

Da beispielsweise ein als Datensammelstation fungierender Sensorknoten A die Umgebungstemperatur eines als Wärmezähler fungierenden Sensorknotens B kennt, kann Sensorknoten A Rückschlüsse auf die zeitliche Diskrepanz seiner Uhr gegenüber der Uhr des Sensorknotens B ziehen, anhand derer eine Anpassung der Anzahl der Synchronisationstelegramme innerhalb eines Synchronisationstelegrammpakets erfolgen kann. Liegt beispielsweise eine hohe Umgebungstemperatur von Sensorknoten B vor, so werden viele Synchronisationstelegramme gesendet, liegt eine geringe Umgebungstemperatur von Sensorknoten B vor, so werden weniger Synchronisationstelegramme gesendet. Auf diese Weise kann eine temperaturabhängige Anpassung bzw. Steuerung der Anzahl der Synchronisationstelegramme innerhalb des Synchronisationstelegrammpakets realisiert werden.

Alternativ kann auch eine jahreszeitabhängige und/oder eine kalenderabhängige und/oder eine heizungsaktivitätsabhängige Anpassung der Anzahl der Synchronisationstelegramme innerhalb des Synchronisationstelegrammpakets realisiert werden. Beispielsweise kann im Winter d.h. bei aktivierter Heizung davon ausgegangen werden, dass eine hohe zeitliche Diskrepanz zwischen den Uhren eines sendenden und eines empfangenden Sensorknotens vorliegen kann, aufgrund dessen die Anzahl der Synchronisationstelegramme innerhalb des Synchronisationstelegrammpakets erhöht werden muss, um eine hohe Trefferwahrscheinlichkeit zu gewährleisten.

Dementsprechend kann im Sommer, d.h. bei deaktivierter Heizung die Anzahl der Synchronisationstelegramme innerhalb des Synchronisationstelegrammpakets verringert werden, da die Wahrscheinlichkeit einer auftretenden Misslage des Empfangsfensters gegenüber eines Synchronisationstelegrammpakets gering ist. Darüber hinaus kann in den Übergangsmonaten des Frühlings und des Herbsts eine mittlere Anzahl von Synchronisationstelegrammen gesendet werden, wodurch eine weitere erhebliche Stromverbrauchsreduktion erzielt werden kann.

Das Verfahren der Steuerung der Anzahl der Synchronisationstelegramme innerhalb eines Synchronisationstelegrammpakets ist insbesondere beim Inverbindungtreten mit Sensorknoten, die Heizkostenverteiler bzw. Wärmezähler bilden, vorteilhaft, die diese insbesondere durch die hohe Umgebungstemperatur asynchron laufende Uhren aufweisen und da sie ohnehin die Temperatur des jeweiligen Heizkörpers messen, bietet sich hier eine Temperaturabhängige Steuerung der Synchronisationstelegramme innerhalb des Synchronisationstelegrammpakets an.

Figur 6 zeigt ein erfindungsgemäßes hierarchisches Netzwerk mit vier Hierarchieebenen und 7 Sensorknoten A bis G als Beispiel für ein komplexeres Netzwerk als in Figur 1. Hieran sei veranschaulicht, dass es bei dem erfindungsgemäßen Verfahren nicht ausschließlich der Fall sein muss, dass ein Sensorknoten einer niedrigeren Hierarchieebene ein Kind nur eines Knotens der direkt darüber liegenden Hierarchieebene ist. In diesem Beispiel bildet Sensorknoten E ein Kind von Sensorknoten B und C und "hört" damit auf alle Synchronisationstelegramme von B und C.

Dies hat den Vorteil, dass im Falle einer Störung zwischen den Sensorknoten E und C, in Folge dessen eine Kommunikationsverbindung zwischen ihnen nicht aufgebaut werden kann, als alternativer Kommunikationspfad zu Sensorknoten A eine Verbindung über Sensorknoten B möglich ist. Eine ebenfalls alternative Kommunikationsverbindung, hier jedoch von E nach C, ist in dem Beispiel gemäß Figur 6 zwischen E und F gebildet. Fällt die Kommunikationsverbindung zwischen E und C aus, so kann eine Datensendung zu C von E via F erfolgen. Diese besonders vorteilhafte Ausführungsvariante bietet durch den Einbau redundanter Kommunikationswege eine hohe Ausfallsicherheit einzelner Kommunikationsverbindungen und gewährleistet damit eine hohe Übertragungssicherheit.

Das beispielhafte Netzwerk gemäß Figur 6 kann somit wie folgend beschrieben werden. Sensorknoten A stellt die Basisstation dar und weist keinen Elternteil auf. A sendet somit für die Phase des Inverbindungtretens nur Synchronisationstelegramme aus, öffnet jedoch kein Empfangsfenster für die Synchronisationstelegramme anderer Sensorknoten. Sensorknoten E sieht drei weitere Knoten in nächster Umgebung und öffnet daher jeweils ein Empfangsfenster für die Synchronisationstelegramme, die von B, C, und F ausgesendet werden. Knoten E besitzt ferner 2 Elternteile, nämlich B und C und aufgrund der Kommunikationsmöglichkeit mit Knoten F besitzt Knoten E zwei redundante Kommunikationsverbindungsmöglichkeiten. Schließlich weisen die Knoten D, E und G keine Kinder auf, so dass sich für deren Synchronisationstelegramme kein Empfangsfenster öffnet.

Vorzugsweise erfolgt die direkte Kommunikation innerhalb des erfindungsgemäßen Netzwerks nur zwischen zwei Sensorknoten, die entweder innerhalb derselben Hierarchieebene angeordnet sind oder sich in zwei verschiedenen unmittelbar benachbarten Hierarchieebenen befinden.

Damit wird ein einheitlicher Datentransfer innerhalb des Netzwerks sichergestellt und die hierarchische Struktur beachtet.

Das Aussenden eines Synchronisationstelegramms ST eines ersten Sensorknotens A erfolgt somit vorzugsweise an alle anderen Knoten im Netzwerk, jedoch erfolgt das Öffnen eines Empfangsfensters nur von mindestens einem zweiten Sensorknoten B, der innerhalb der gleichen Hierarchieebene wie der erste Sensorknoten A oder in einer direkt benachbarten vorzugsweise darunter liegenden Hierarchieebene angeordnet ist.

Das Verfahren der Aussendung von Synchronisationstelegrammpaketen kann insbesondere auch zum Aufbau eines Netzwerks verwendet werden, beispielsweise bei Inbetriebnahme oder auch bei der selbstständigen Reparatur des Netzwerks im Falle eines temporären Verbindungsausfalls zu einem Sensorknoten. Auch ist eine Eingliederung neuer Sensorknoten mit Hilfe des der Erfindung zugrunde liegenden Verfahrens einfach und leicht möglich. Hierzu wird vorgeschlagen, dass beispielsweise alle vernetzten Sensorknoten regelmäßig Synchronisationstelegrammpakete senden, die mit einer Information versehen sind, die angibt, zu welchem Netzwerk sie gehören. Ein unvernetzter Sensorknoten muss diese Synchronisationstelegrammpakete bzw. die Synchronisationstelegramme innerhalb eines Pakets suchen und finden, um sich (wieder) in das Netzwerk integrieren zu können.

Da sich aufgrund der geschilderten Problematik nur relativ kurze Empfangsfenster realisieren lassen, ist die Trefferwahrscheinlichkeit bei lediglicher Aussendung von Synchronisationstelegrammen anstelle von Paketen außerordentlich klein. Es bietet sich daher zum Zwecke eines Netzwerkaufbaus bzw. zur Inbetriebnahme eines Netzwerks oder der Reparatur (Heilung) eines Netzwerks an, vernetzte Sensorknoten fortlaufend Synchronisationstelegrammpakete aussenden zu lassen, um auf diese Weise die Trefferwahrscheinlichkeit, mit der ein Empfangsfenster gerade auf ein Synchronisationstelegramm fällt, deutlich zu erhöhen und damit eine Integration unvernetzter Knoten einfach zu ermöglichen.

Für die Einleitung einer Kommunikation im Anschluss an einen erfolgreichen Empfang eines Synchronisationstelegramms schaltet in einer bevorzugten Ausführungsvariante des erfindungsgemäßen Verfahrens ein Sensorknoten A nach Aussendung eines Synchronisationstelegramms in einen Zuhörmodus, der durch die Aktivierung der Empfangseinheit des Sensorknotens A gekennzeichnet ist. Wurde von einem Sensorknoten B ein Synchronisationstelegramm erfolgreich empfangen, so sendet er ein Signal zu Knoten A zurück, mit dem er seine Präsenz im Netzwerk Knoten A mitteilt. Es kann nun anschließend eine Kommunikation insbesondere eine Sendung von Verbrauchsmessdaten von Knoten B zu Knoten A erfolgen.

## Patentansprüche

1. Verfahren zur Synchronisation von mindestens zwei miteinander in Verbindung tretenden Netzknoten (A, B) eines zur drahtlosen Übertragung von Daten ausgelegten Netzwerks, insbesondere zur drahtlosen Übertragung und Verarbeitung von Verbrauchsmessdaten ausgelegten Sensornetzwerks,
**dadurch gekennzeichnet,**
- **dass** zur Synchronisation der Netzknoten, um eine Kommunikationsverbindung zwischen diesen einzuleiten, in zeitlichen Abständen (T₁) von einem ersten Netzwerkknoten (A) ein auf einen Zeitraum (T_{SP}) begrenztes Synchronisationstelegrammpaket mit einer Vielzahl von Synchronisationstelegrammen gesendet wird, und
- **dass** mindestens ein zweiter Netzknoten (B) in zeitlichen Abständen (T₂) ein zeitlich begrenztes Empfangsfenster öffnet, innerhalb dessen ein Synchronisationstelegramm empfangbar ist.

2. Verfahren nach Anspruch 1,
**dadurch gekennzeichnet, dass** die Aussendung eines Synchronisationstelegrammpakets
- im Falle eines nicht oder nicht vollständig innerhalb der zeitlichen Grenzen des Empfangsfensters liegenden und von dem Synchronisationstelegrammpaket unabhängigen Synchronisationstelegramms (ST) erfolgt und/ oder
- bei Aufbau eines Sensornetzwerks und/ oder
- bei Integration neuer Knoten in ein bestehendes Sensornetzwerk und/ oder
- bei Reintegration verlorengegangener Netzknoten in das Netzwerk
erfolgt.

3. Verfahren nach Anspruch 1 oder 2,
**dadurch gekennzeichnet, dass** zumindest den innerhalb des Zeitraums (T_{SP}) gesendeten Synchronisationstelegrammen eine Kennung zugewiesen wird, die die Position dieser Synchronisationstelegramme innerhalb des Synchronisationstelegrammpakets definiert.

4. Verfahren nach Anspruch 3,
**dadurch gekennzeichnet, dass** als Kennung der innerhalb des Zeitraums (T_{SP}) gesendeten Synchronisationstelegramme, diesen vorzugsweise eine Nummer um ein Bezugssynchronisationstelegramm vergeben wird.

5. Verfahren nach einem der vorherigen Ansprüche,
**dadurch gekennzeichnet, dass** wenigstens ein Synchronisationstelegramm innerhalb des Synchronisationstelegrammpakets zu einem anderem Synchronisationstelegramm innerhalb des Synchronisationstelegrammpakets beabstandet wird.

6. Verfahren nach einem der vorherigen Ansprüche,
**dadurch gekennzeichnet, dass** alle Synchronisationstelegramme innerhalb des Synchronisationstelegrammpakets identisch beabstandet werden.

7. Verfahren nach einem der vorherigen Ansprüche,
**dadurch gekennzeichnet, dass** nach erfolgreichem Empfang eines Synchronisationstelegramms seine Kennung derart ausgewertet und eine zeitliche Anpassung insbesondere eine Verschiebung des Empfangsfensters derart vorgenommen wird, dass es beim nächst folgenden von dem Synchronisationstelegrammpaket unabhängigen Synchronisationstelegramm im Bereich um dieses Synchronisationstelegramm liegt oder beim nächst folgenden Synchronisationstelegrammpaket innerhalb der zeitlichen Grenzen insbesondere zentral innerhalb dieses Synchronisationstelegrammpakets liegt.

8. Verfahren nach einem der vorherigen Ansprüche,
**dadurch gekennzeichnet, dass** das Aussenden eines Synchronisationstelegramms (ST) eines ersten Netzknotens (A) an alle anderen Knoten im Netzwerk erfolgt, jedoch das Öffnen des Empfangsfensters nur von mindestens einem zweiten Netzknoten (B) erfolgt, der innerhalb der gleichen Hierarchieebene wie der erste Netzknoten (A) oder in einer direkt benachbarten vorzugsweise darunter liegenden Hierarchieebene angeordnet ist.

9. Verfahren nach einem der vorherigen Ansprüche,
**dadurch gekennzeichnet, dass** der zeitliche Abstand zwischen zwei Synchronisationstelegrammen innerhalb eines Synchronisationstelegrammpakets kleiner gewählt ist, als die zeitliche Breite des Empfangsfensters, so dass im Falle einer vollständigen Lage des Empfangsfensters innerhalb des Synchronisationstelegrammpakets zumindest ein Synchronisationstelegramm empfangbar ist.

10. Verfahren nach einem der vorherigen Ansprüche,
**dadurch gekennzeichnet, dass** die Anzahl der Synchronisationstelegramme innerhalb des Synchronisationstelegrammpakets in Abhängigkeit von der Umgebungstemperatur des zu synchronisierenden Netzknotens oder in Abhängigkeit von der Synchronizität zwischen sendendem Netzknoten (A) und empfangenden Netzknotens (B) und/ oder Kalender abhängig und/ oder verbrauchsabhängig angepasst wird.

11. Netzwerk, insbesondere ein Sensornetzwerk zur drahtlosen Übertragung von Daten insbesondere Verbrauchsmessdaten mit mindestens zwei miteinander in Verbindung tretbaren Netzknoten (A, B), die jeweils zumindest eine Sendeeinheit und eine Empfangseinheit, eine Sensoreinheit, Mittel zur zeitlichen Steuerung ihres Sende- und Empfangsbetriebes und eine Stromversorgung aufweisen, **dadurch gekennzeichnet, dass** die Sendeeinheit mindestens eines ersten Netzknotens (A) in zeitlichen Abständen (T₁) zumindest ein Synchronisationstelegrammpaket sendet und die Empfangseinheit mindestens eines zweiten Netzknotens (B) in zeitlichen Abständen (T₂) ein zeitlich begrenztes Empfangsfenster öffnet, innerhalb dessen ein Synchronisationstelegramm des Synchronisationstelegrammpakets empfangbar ist, wobei nach erfolgreichem Empfang eine Kommunikation stattfinden kann, insbesondere wobei das Inverbindungtreten der beiden Netzknoten (A, B) nach dem Verfahren nach einem der Ansprüche 1 bis 9 erfolgt.
